# EUROPEAN PATENT APPLICATION

(11) **EP 4 420 814 A1**
(43) Date of publication of application: **28.08.2024**
(21) Application number: 24158880.5
(22) Date of filing: 21.02.2024
(51) Int. Cl.: B23B 27/10, B23B 27/00, B23B 27/16

(54) **CUTTING TOOL**

(30) Priority: 22.02.2023 JP 2023026226; 28.09.2023 JP 2023168338
(71) Applicant: Tungaloy Corporation, Iwaki-shi, Fukushima 970-1144 (JP)
(72) Inventor: SUZUKI, Yusuke, Iwaki-shi, Fukushima, 9701144 (JP)
(74) Representative: Vossius & Partner Patentanwälte Rechtsanwälte mbB

(57) **Abstract**

A cutting tool able to sufficiently supply coolant toward a cutting edge of a cutting insert during a cutting process involving grooving a workpiece face includes a first flow path through which coolant is supplied toward a body leading end side, a first jetting port, a second flow path branching at a branch point along the first flow path, a second jetting port, and a guide member having a guide surface distanced from the second jetting port and forming a space for coolant to flow to the cutting edge from the second jetting port. In the first flow path, a substantially straight upstream-of-branch flow path on further toward a base end side than the branch point is at least twice as long as a downstream-of-branch flow path from the first jetting port to the branch point. The second flow path inclines at a 30° to 85° angle to the upstream-of-branch flow path.

## Description

### Background

### Field

The present invention relates to a cutting tool.

### Description of Related Art

Technologies that are disclosed in Patent Publications JP-A-2005-238370, JP-A-2007-320012 and the like have conventionally been utilized as techniques for appropriately routing a coolant flow path in a body of a cutting tool capable of grooving an end surface of a workpiece (e.g., cutting a ringshaped groove in the end surface). Technologies that incorporate a cutting insert or a carbide part provided with a cutting edge into a coolant flow path are also utilized (e.g., see Patent Publication WO 2015/056406).

With cutting tools that supply coolant using a coolant flow path inside the body such as those described above, a structure in which portions of the coolant flow path excluding a coolant inflow port and a jetting port are sealed is generally adopted (e.g., see, Patent Publications JP-A-2010-179380, JP-A-2013-107196, JP-A-6-285703). Such a structure can be said to be premised on the coolant, which flows through the coolant flow path, being a laminar flow.

However, conventional cutting tools such as the above, particularly round shank tools having a small diameter, may have trouble supplying coolant directly toward places, where supply is strongly desired, such as a flank of the cutting edge.

In view of this, an object of the invention is to provide a cutting tool able to sufficiently supply coolant toward a cutting edge of a cutting insert during a cutting process that involves grooving an end surface of a workpiece.

### Summary

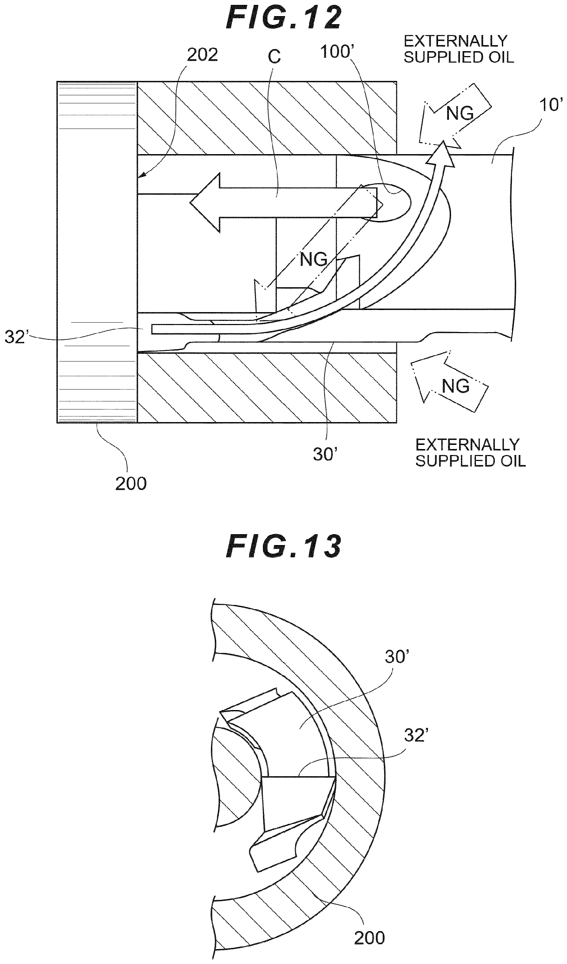

In order to solve such a problem, the inventors investigated the flow of coolant during grooving of an interior end surface having a small inside diameter and the factors destabilizing this flow. Problems that arise during grooving of an interior end surface 202 of a workpiece 200 having small inside diameter are often mainly caused by chip discharge and coolant supply (see FIGS. 12 and 13). Problems with chip discharge tend to arise due to various reasons such as the chip discharge direction being restricted in the case of small-bore interior machining, the chip discharge path being fixed by the groove width in the case of grooving (e.g., as shown in FIG. 12, the only chip discharge path is the groove leading from a cutting edge 32' of a cutting insert 30' to a base end side), and the chip discharge path being twisted in the case of small-bore end facing (see FIG. 12). On the other hand, coolant C that is meant to be supplied toward the cutting edge 32' using a coolant flow path 100' of a body 10' hits the chips, which not only inevitably tend to impede the dischargeability of the chips but also impedes the crucial supply of the coolant C to the cutting edge 32'. Also, even if coolant is supplied from the outside without using the coolant flow path 100' of the body 10', supplying the coolant to the cutting edge in such a cutting process is difficult because there are no gaps large enough to supply the coolant due to the nature of the process. As such, in order to avoid a supply shortage of the coolant C without sacrificing chip dischargeability, it is conceivable to supply the coolant C through the coolant flow path 100' of the body 10' and pack (fill) the cut groove with the coolant C. However, packing the cut groove with the coolant C would be difficult under any circumstances, due to variables such as groove volume and groove shape that change according to the shape of the workpiece 200. Accordingly, with conventional methods, problems such as the coolant C not reaching the cutting edge 32' and the flow of the coolant C pushing against the chips are likely to occur. The inventors conducted further investigations with consideration for these various problems, regarding the coolant C as a mass body and focusing on diverting the coolant C in advance in a desired emission direction at speed, with the idea of supplying the coolant C while avoiding hitting the chips, and thereby arrived at findings that led to overcoming the problems.

One mode of the invention that is based on such knowledge is a cutting tool having a structure in which a cutting insert provided with a cutting edge is removably mountable to an insert seat on a leading end portion side of a body, the cutting tool including a first flow path through which coolant is supplied from a base end portion side of the body toward the leading end portion side, a first jetting port provided in an end portion of the first flow path, a second flow path branching at a branch point partway along the first flow path, a second jetting port provided in an end portion of the second flow path, and a guide member having a guide surface disposed away from the second jetting port and at least forming a space for the coolant to flow out to the cutting edge from the second jetting port. In the first flow path, an upstream-of-branch flow path which is a flow path on further toward the base end portion side than the branch point is a substantially straight flow path having a length not less than twice a length of a downstream-of-branch flow path from the first jetting port to the branch point. The second flow path is inclined at an angle of not less than 30° and not more than 85° to the substantially straight upstream-of-branch flow path, and a length of the second flow path is shorter than the length of the downstream-of-branch flow path from the first jetting port to the branch point.

In such a cutting tool, the coolant can be jetted not only from the first jetting port of the first flow path but also from the second jetting port of the second flow path that branches partway along the first flow path, and the coolant jetted from the second jetting port can be guided through the coolant outflow space to the cutting edge by the guide member. According to such a configuration, the coolant can be reliably supplied to the cutting edge along the guide member.

Moreover, in this cutting tool, conditions for diverting the coolant in a desired jetting direction in advance are set, while adopting a relatively simple configuration adapted to actual circumstances in which the first flow path and the second flow path that branches partway along the first flow path are provided, and the guide member is spaced away from the second jetting port (i.e., the second jetting port is not blocked by the guide member). That is, by setting conditions stipulating that the upstream-of-branch flow path is constituted as a substantially straight flow path having a length not less than twice the length of the downstream-of-branch flow path, and that the second flow path is inclined at an angle of not less than 30° and not more than 85° to the substantially straight upstream-of-branch flow path, in order to ensure that the portion of the gas-liquid multiphase flow flowing through the first flow path that enters the second flow path can be reliably supplied to the cutting edge, based on the idea of jet flow engineering, a structure is realized in which a deflection component of velocity is also given to the diverted flow of the coolant having a constant speed component in the forward direction (direction toward the leading end portion of the body), and the coolant flows toward the cutting edge after flowing through the second flow path. Also, in light of the actual structure, utilizing the cutting insert as the guide member is in line with actual circumstances, but since the surface on the inner side of an actual cutting insert may have a complex three-dimensional shape, and the shape of gaps between this surface and the second jetting port also tend to be complex, sealing the gaps is not always easy. In this regard, with the cutting tool according to this mode, by setting predetermined conditions such as described above, while assumed that there is also gaps on the base end side, rather than rectifying the coolant to flow to the leading end side by sealing the gaps between the guide surface and the second jetting port, a structure is realized in which coolant having a constant speed component in the forward direction (direction toward the leading end portion of the body) flows through the second flow path and is jetted from the second jetting port, and thereafter flows toward the leading end portion along the guide member rather than toward the base end portion side.

In a cutting tool such as described above, the upstream-of-branch flow path may be a substantially straight flow path having a length not less than three times the length of the downstream-of-branch flow path from the first jetting port to the branch point.

In a cutting tool such as described above, the guide member may be provided in a position at least partially blocking a direction in which the coolant is jetted from the second jetting port.

In a cutting tool such as described above, an outflow direction in which the coolant is guided by the guide member may at least include a component substantially parallel to a direction in which the coolant is jetted from the first jetting port.

In a cutting tool such as described above, the cutting insert may be used as the guide member.

In a cutting tool such as described above, the second jetting port may be provided in the insert seat.

In a cutting tool such as described above, a portion of a first surface of the cutting insert that faces the insert seat may function as the guide surface.

In a cutting tool such as described above, a screw hole through which a fastening screw for fastening the cutting insert to the body is passable may be provided on further toward the base end portion side than the portion of the first surface of the cutting insert that functions as the guide surface.

In a cutting tool such as described above, the portion of the first surface of the cutting insert that functions as the guide surface may include an inclined portion inclined toward the cutting edge.

In a cutting tool such as described above, the guide member may be formed such that a portion of a space between the guide member and the insert seat that faces a flank side of the cutting edge widens.

In a cutting tool such as described above, a cross-sectional area of the second flow path may be smaller than a cross-sectional area of the first flow path in a vicinity of the first jetting port.

In a cutting tool such as described above, the first flow path may be a flow path having a constant cross-sectional area from the upstream-of-branch flow path to the first jetting port.

In a cutting tool such as described above, the first flow path may be a flow path having a circular cross-section from the upstream-of-branch flow path to the first jetting port.

In a cutting tool such as described above, the first flow path may be constituted by a substantially straight flow path from the upstream-of-branch flow path to the first jetting port.

In a cutting tool such as described above, the second flow path may be a flow path having a constant cross-sectional area from the branch point to the second jetting port.

In a cutting tool such as described above, the second flow path may be a flow path having a circular cross-section from the branch point to the second jetting port.

In a cutting tool such as described above, the second flow path may be constituted by a substantially straight flow path from the branch point to the second jetting port.

In a cutting tool such as described above, at least one of the first flow path and the second flow path may be a perfectly straight flow path.

### Brief Description of Drawings

FIG. 1 is a perspective view showing an example structure of a cutting tool in one embodiment of the invention;
FIG. 2 is a perspective view schematically showing coolant flowing through a coolant flow path in a body;
FIG. 3 is a perspective view schematically showing the coolant flow path in the body and a space into which coolant could possibly leak between the body and a cutting insert;
FIG. 4 is a diagram schematically showing only the space into which coolant could possibly leak in FIG. 3;
FIG. 5 is a diagram illustrating the flow of coolant in the cutting tool as viewed from the side on which a rake surface of a cutting edge is located;
FIG. 6 is a diagram showing a state in which the cutting insert in FIG. 5 is a sectioned in half;
FIG. 7 is a diagram schematically showing only the coolant in FIGS. 5 and 6;
FIG. 8 is a diagram showing the space into which coolant could possibly leak shown in FIG. 4 as viewed along a screw axis;
FIG. 9 is a diagram showing the space into which coolant could possibly leak shown in FIG. 4 as viewed from a leading end portion side of the cutting tool;
FIG. 10 is an image showing coolant being jetted in a state where a first jetting port is not blocked;
FIG. 11 is an image showing coolant being jetted in a state where the first jetting port is blocked for reference purposes;
FIG. 12 is a reference diagram for describing the flow of coolant during grooving of an interior end surface having a small inside diameter and factors destabilizing the flow; and
FIG. 13 is a diagram showing a schematic of the cutting tool and a workpiece shown in FIG. 12 as viewed along a central axis from the leading end portion side of the cutting insert.

### Detailed Description

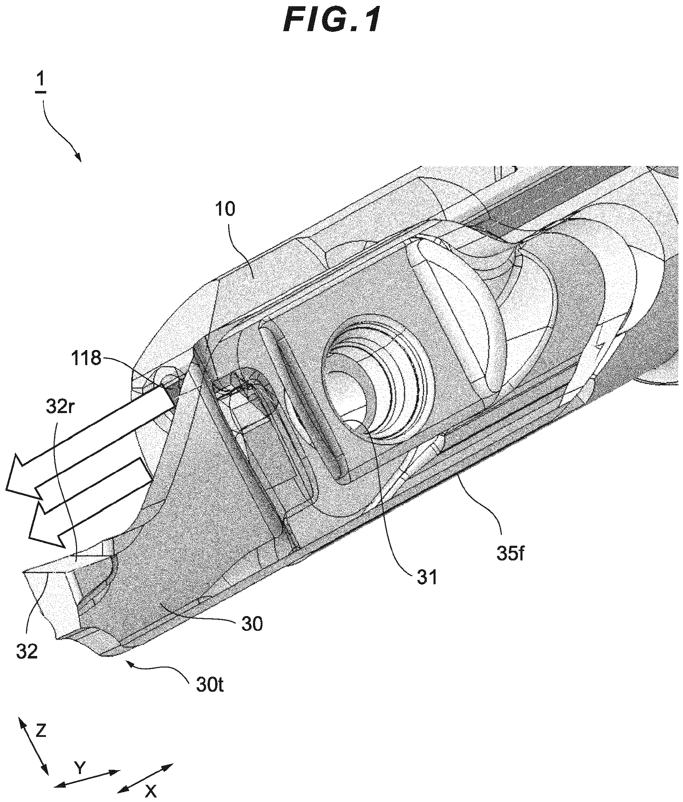

Hereinafter, a preferred embodiment of a cutting tool according to the invention will be described in detail with reference to the drawings (see FIG. 1, etc.).

A cutting tool 1 described below is configured as a tool suitable for a process such as grooving a bore end surface of a workpiece 200, and is constituted by a body 10 and a cutting insert 30 that is mounted to an insert seat 12 of a leading end portion 10t of the body 10 (see FIG. 1, etc.).

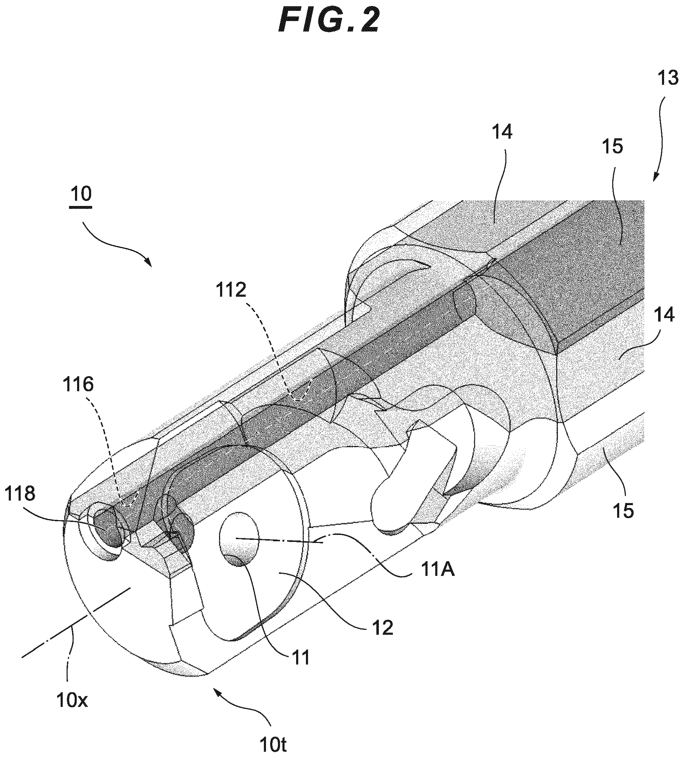

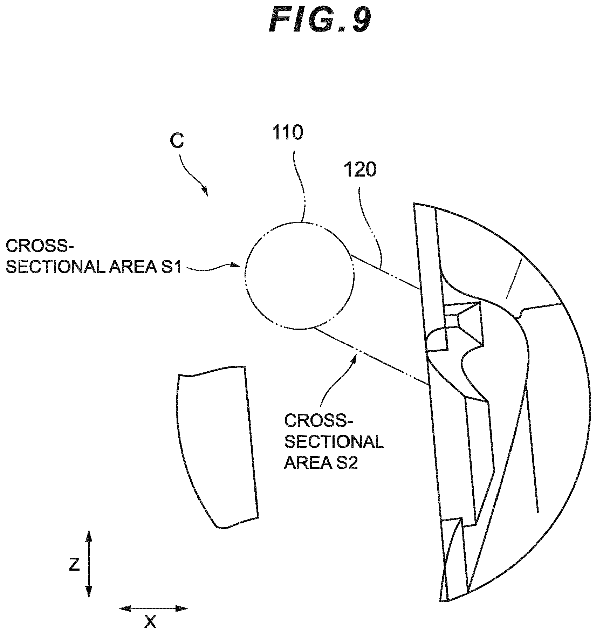

Herein, three directions or axes are defined as follows, for convenience of description. Note that the directions (or axes) defined here are those of the cutting tool 1 alone. First, an axis parallel to a central axis 10x along a longitudinal direction of the body 10 (see FIGS. 2, 12) is given as an X axis, and a Y axis perpendicular to the X axis and a Z axis perpendicular to the X axis and the Y axis are defined (see FIG. 1, etc.). The Y axis is perpendicular to one set of flat surfaces 14 out of four flat surfaces (constituted by one set of parallel planes and another set of planes perpendicular thereto) 14 formed on a peripheral surface 13 on the base end portion 10b side of the body 10, and the Z axis is perpendicular to the other set of flat surfaces 14 (see FIGS. 2, 9, etc.). The portion of the base end portion side peripheral surface 13 excluding the flat surfaces 14 is a cylindrical outer peripheral surface 15.

### Body

The insert seat 12 of the body 10 is provided with a screw hole 11 into which a screw part 51 of a fastening screw 50 is screwed (see FIG. 2). A screw axis passing through the center of the screw hole 11 is denoted by reference numeral 11A.

The body 10 of the cutting tool 1 of the present embodiment is provided with a coolant flow path 100 for supplying coolant C from the base end portion 10b side to a leading end portion 10t side of the body 10 (see FIG. 1, etc.). The coolant flow path 100 is constituted to include a first flow path 110 and a second flow path 120 that branches partway along the first flow path 110 (see FIG. 2, etc.).

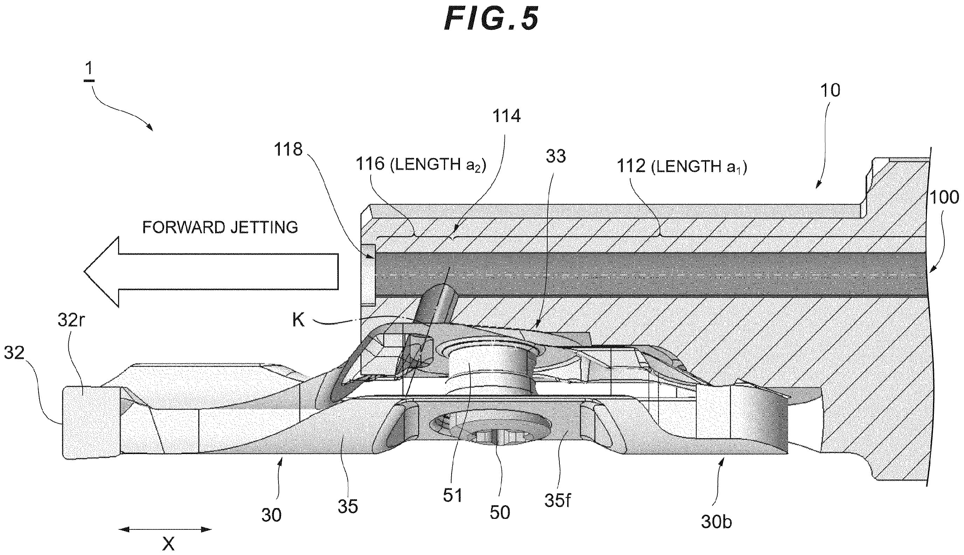

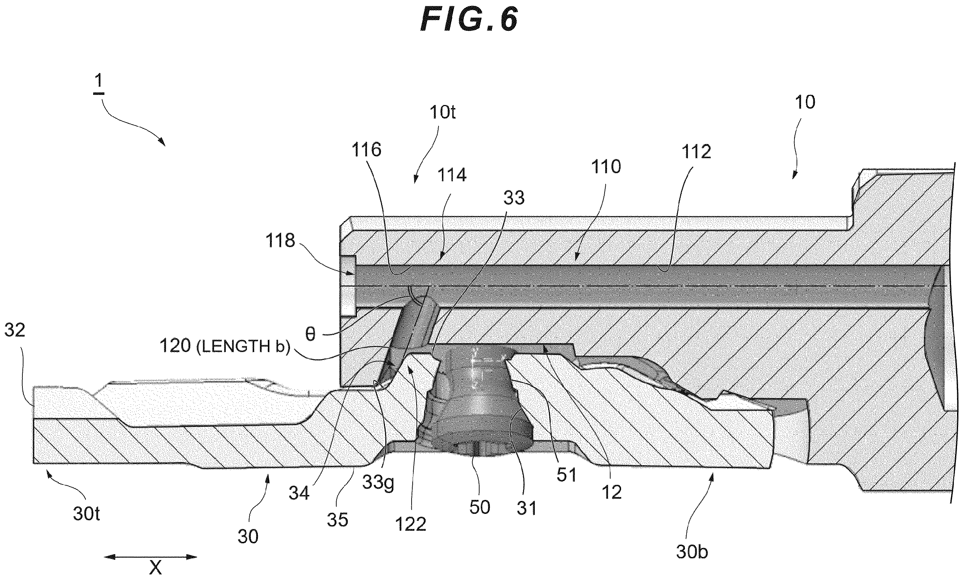

The first flow path 110 is a flow path constituted along the X axis so as to supply the coolant C from the base end portion 10b side to the leading end portion 10t side of the body 10 (see FIG. 1, etc.). A branch point 114 that branches to the second flow path 120 serving as another flow path is provided partway along the first flow path 110. Herein, the portion of the first flow path 110 that is on further toward the base end portion 10b side than this branch point 114 will be referred to as a "upstream-of-branch flow path", and the portion of the first flow path 110 on further toward the leading end portion 10t side than the branch point 114 will be referred to as a "downstream-of-branch flow path", and, in the diagrams, these portions are denoted by reference numerals 112 (upstream-of-branch flow path) and 116 (downstream-of-branch flow path), respectively (see FIGS. 5, 6, etc.). A first jetting port 118 constituted by an opening is provided in a leading end (end portion on leading end portion 10t side) of the first flow path 110. The coolant C flowing toward the leading end portion 10t side through the downstream-of-branch flow path 116 of the first flow path 110 is jetted forward from this first jetting port 118 (see FIG. 5, etc.).

The first flow path 110 is provided inside the body 10 as a flow path extending in a substantially straight line along the X axis. In the present embodiment, the first flow path 110 is a perfectly straight cylindrical flow path extending straight along the X axis and having a circular cross section with the same inside diameter throughout and a constant cross-sectional area (see FIG. 6, etc.). Such a flow path is, however, merely a preferred example, and, as will be described to later, the first flow path 110 need not be a perfectly round flow path having a uniform cross-section, or a flow path extending perfectly straight along the X axis.

The second flow path 120 is a flow path that is formed so as to branch at branch point 114 partway along the first flow path 110 and to supply the coolant C toward the insert seat 12. This second flow path 120 is formed so as to extend along a K axis (see FIG. 5) that is inclined at a predetermined angle to the X axis, and the second flow path 120 is thus inclined with respect to the upstream-of-branch flow path 112 of the first flow path 110. An inclination angle θ of the second flow path 120 with respect to the upstream-of-branch flow path 112 of the first flow path 110 is, for example, not less than 30° and not more than 85°, and preferably not more than 70°, but as long as there remains flow toward the leading end portion 10t side, including the coolant C branched to the second flow path 120 (this will be described later), the size thereof is not particularly limited.

Also, the second flow path 120 is provided as a flow path extending in a substantially straight line along the K axis. In the present embodiment, the second flow path 120 is a perfectly straight cylindrical flow path extending straight along the K axis and having a circular cross section with the same inside diameter throughout and a constant cross-sectional area (see FIG. 6, etc.). Also, the second flow path 120 may have a cross-sectional area S2 smaller than a cross-sectional area S1 of the first flow path 110 in a vicinity of the first jetting port 118 (see FIG. 9). In such a case, the coolant flow rate in the second flow path 120 tends to be lower than the coolant flow rate in the first flow path 110. Note that a flow path such as described above is merely a preferred example, and, as will be described later, the second flow path 120 need not be a perfectly round flow path having a uniform cross section or a flow path extending perfectly straight along the K axis.

A second jetting port 122 is provided in an end portion of the second flow path 120 (see FIG. 6, etc.). In the cutting tool 1 of the present embodiment, this second jetting port 122 is provided in a portion where the insert seat 12 is located (see FIG. 6, etc.). The second jetting port 122 is an opening in the insert seat 12, and the coolant C is jetted toward a space between the insert seat 12 and the cutting insert 30.

In the coolant flow path 100 as described above, when the length of the downstream-of-branch flow path 116 (length along the X axis from the branch point 114 to the first jetting port 118) is given as a₂, a length a₁ of the upstream-of-branch flow path 112 (length of the portion of the first flow path 110 on further toward the base end portion 10b side than the branch 114) is preferably not less than twice a₂ (a₁ ≥ 2a₂), and more preferably not less than three times a₂ (a₁ ≥ 3a₂).

Also, in the coolant flow path 100 as described above, when the length of the second flow path 120 (length along the K axis from the branch point 114 to the second jetting port 122) is given as b, the length b is shorter than the length a₂ of the downstream-of-branch flow path 116 (b < a₂) (see FIG. 6, etc.).

### Cutting Insert

The cutting insert 30 is provided with a screw hole 31, a cutting edge 32, a guide surface 33g, an inclined portion 34 and a peripheral side surface 35, and is formed to be removable from the insert seat 12 of the body 10 as described above (see FIGS. 1, 5, 6, etc.). The cutting insert 30 of the present embodiment is disposed in the insert seat 12 so as to at least partially block the direction in which the coolant is jetted from the second jetting port 122.

The screw hole 31 is a hole provided for the screw part 51 of the fastening screw 50 to pass through (see FIG. 5, etc.). In the present embodiment, the screw hole 31 is provided in a position closer to a base end portion 30b of the cutting insert 30 than is the portion functioning as the guide surface 33g (see FIG. 6, etc.).

A cutting edge 32 is formed on a leading end portion 30t of the cutting insert 30 (see FIG. 5, etc.). Reference numeral 32r denotes a rake surface of the cutting edge 32.

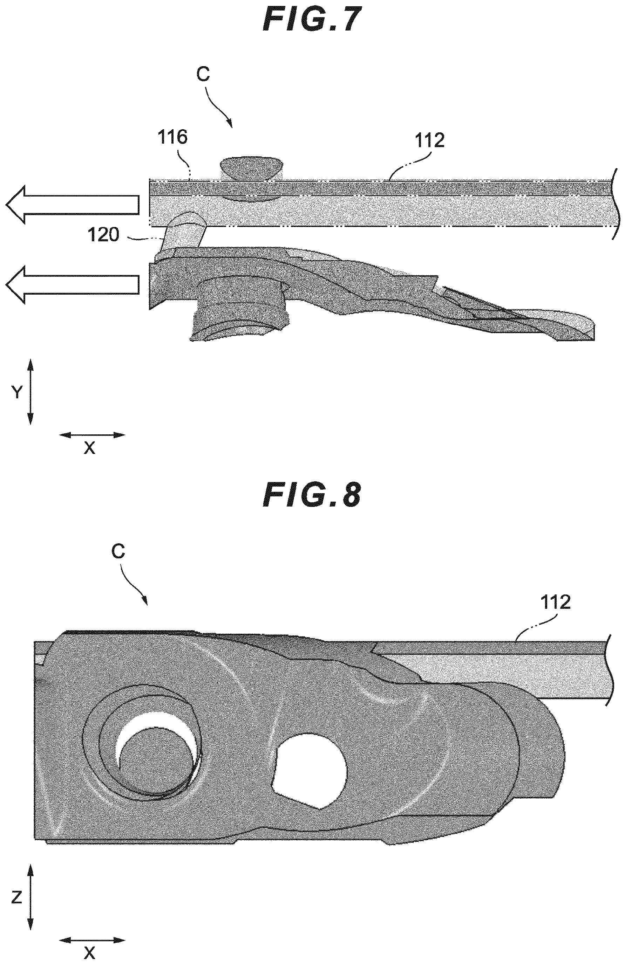

The guide surface 33g is formed on a side surface (first surface) 33 side of the cutting insert 30 that faces the insert seat 12 of the body 10 (see FIG. 6, etc.). The guide surface 33g of the cutting insert 30 in the cutting tool 1 of the present embodiment is disposed away from the second jetting port 122 of the body 10, and is provided so as to at least form a space for the coolant C to flow out to the cutting edge 32 from the second jetting port 122 (see FIGS. 6, 7, etc.). The portion functioning as such a guide surface 33g is favorably disposed at a position closer to the leading end portion 30t than is the screw hole 31 of the cutting insert 30 (see FIG. 6, etc.).

Note that although such a guide surface may of course be formed using a member other than the cutting insert 30, in the cutting tool 1 of the present embodiment, a portion of the cutting insert 30 (e.g., the first surface facing the insert seat 12 as described above) is configured to function as the guide surface for causing the coolant C to flow to the cutting edge 32.

The peripheral side surface 35 is a second surface of the cutting insert 30 that faces an opposite side to the guide surface 33g. In the present embodiment, this peripheral side surface 35 is formed by a surface whose cross section includes a circular arc-shaped outer peripheral surface, and the cutting insert 30 is cylindrical when viewed from the leading end portion 30t (or in a YZ cross-section perpendicular to the X axis), which is a shape suitable for end surface grooving (see FIG. 13, etc.). A portion of the peripheral side surface 35 around the screw hole 31 is cut down so as to be flat and forms a flat surface 35f (see FIG. 6, etc.). It is possible to reduce manufacturing costs by eliminating excess thickness to form a flat surface in this way.

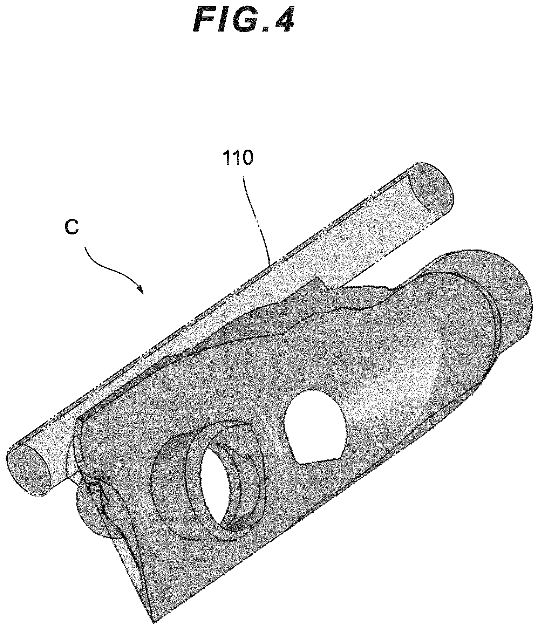

According to the cutting tool 1 of the present embodiment constituted as described above, even if the gaps between the body 10 and the cutting insert 30 cannot be completely sealed, or even if the gaps are not sealed, it is possible for the coolant C to be sufficiently supplied toward the cutting edge 32 during a cutting process that involves grooving the end surface of the workpiece 200. The principles and mechanisms thereof will be described below. Note that, FIGS. 4 and FIGS. 7 to 9 schematically show only the space into which the coolant C could possibly leak between the insert seat 12 and the cutting insert 30 in order to facilitate understanding of the description.

In the cutting tool 1 of the present embodiment, the first flow path 110 and the second flow path 120 that branches partway along the first flow path 110 are provided as the coolant flow path 100, and, rather than using packing or sealant to seal the gaps between the cutting insert 30 and the insert seat 12 in which the second jetting port 122 is provided, a relatively simple configuration adapted to actual circumstances in which a space is deliberately provided in that portion is adopted, with a feature being the setting of conditions for diverting the coolant C in a desired jetting direction assuming such a configuration. In other words, in the present embodiment, by setting conditions stipulating that the upstream-of-branch flow path 112 of the first flow path 110 is a substantially straight flow path whose length a₁ is not less than twice the length a₂ of the downstream-of-branch flow path 116, and preferably not less than three times the length a₂, and that the second flow path 120 is inclined at a predetermined angle θ (e.g., not less than 30° and not more than 85°, and preferably not more than 70°) to the substantially straight upstream-of-branch flow path 112, on condition that the portion of the gas-liquid multiphase flow flowing through the first flow path 110 that enters the second flow path 120 can be reliably supplied to the cutting edge 32, based on the idea of jet flow engineering, a structure is realized in which a deflection component of velocity is also given to the diverted flow of the coolant C having a constant speed component in the forward direction (direction facing the leading end portion 10t of the body 10 along the X axis), and the coolant flows toward the cutting edge 32 after flowing through the second flow path 120 (see FIGS. 1 and 7, etc.).

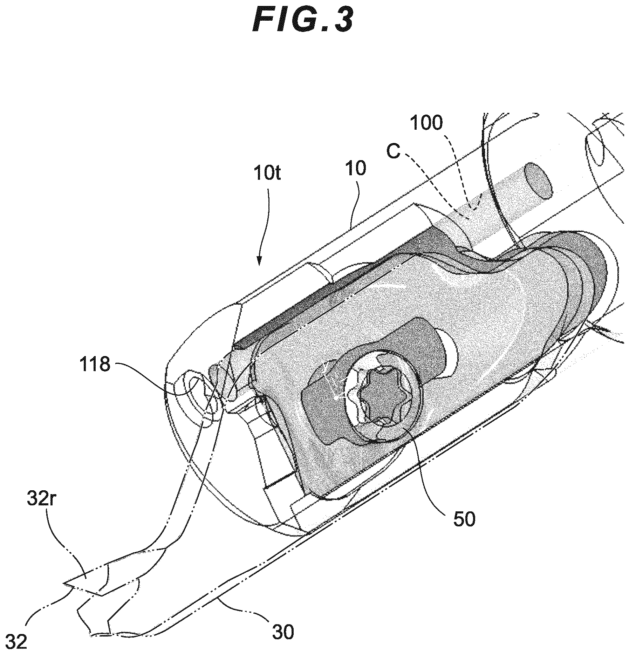

Also, in light of the actual structure of the cutting tool 1, it can be said that utilizing a portion of the cutting insert 30 as the member for guiding the coolant C in the forward direction, rather than going to the trouble of preparing another member for that purpose is in line with actual circumstances, but since the surface (side surface 33 in the present embodiment) on the inner side of an actual cutting insert may have a complex three-dimensional shape, and the shape of gaps between this surface and the second jetting port 122 also tend to be complex, sealing the gaps is not always easy. In this regard, with the cutting tool 1 of the present embodiment, by setting predetermined conditions such as described above, while assumed that there are also gaps in all directions on the base end portion 10b side and in other portions, rather than rectifying the coolant C to flow to the leading end portion 10t side by sealing the gaps between the cutting insert 30 and the second jetting port 122, a structure is realized in which the coolant C having a constant speed component in the forward direction (in other words, coolant flowing at the initial velocity of forward jetting, with the forward direction being the direction toward the leading end portion 10t of the body 10) flows through the second flow path 120 and is jetted from the second jetting port 122, and thereafter flows toward the leading end portion 10t along the guide surface 33g of the side surface 33 of the cutting insert 30 rather than toward the base end portion 10b side (see FIGS. 1 to 9).

The above can also be described from another perspective as follows. That is, technically, due to the first flow path 110 intersecting the second flow path 120, a portion of the flow path wall thereof is missing (a portion of the first flow path 110 is open toward the second flow path 120), and thus some of the pipe friction that occurs on the first flow path 110 is lost at the branch point 114. As a result, with both a laminar flow and a gas-liquid multiphase flow, some of the fluid flowing through the first flow path 110 flows into the second flow path 120. In the case of a laminar flow, if the fluid pressure increases, the pressure of the second flow path 120 also rises as a result, but in the case of a jet flow, the pressure of the heavy mass component of the second flow path 120 decreases as the pressure of the first flow path 110 increases (the fluid tends to flow more to the first flow path 110 and the amount leaking to the second flow path 120 decreases, and the pressure also decreases). In the present embodiment, by regarding the coolant C as a mass body and diverting the coolant C at speed in the desired jetting direction in advance, while taking into account such properties, even in an open system, it is possible to supply coolant in any direction that is not the direction of a jetting port (direction of the second jetting port 122, i.e., the direction along the K axis, in the case of the cutting tool 1 of the present embodiment). Also, the member for guiding the coolant C in the forward direction (this being the cutting insert 30 in the present embodiment) functions to stop the flow in the Y axis direction generated by the second flow path 120 and adjust the flow in only the X axis direction.

Note that the guide surface 33g of the side surface 33 of the cutting insert 30 is favorably formed such that the outflow direction of the coolant C that is guided by the guide surface 33g includes a component that is substantially parallel to the direction in which the coolant C is jetted from the first jetting port 118 described above (in other words, a component along the X axis direction). As an example, in the present embodiment, the inclined portion 34 that is inclined toward the cutting edge 32 is provided in the portion of the side surface 33 of the cutting insert 30 that functions as the guide surface 33g, thereby ensuring that more of the coolant jetting component along the X axis direction is included (see FIG. 6, etc.). Furthermore, in the present embodiment, the cutting insert 30 is formed such that the portion of the space between the cutting insert 30 and the insert seat 12 that faces a flank side of the cutting edge 32 widens in the manner of a jetting port (see FIG. 7, etc.). In the cutting tool 1 having such a structure, no excess space is required between the body 10 and the cutting insert 30, thus enabling the wall thickness of the cutting insert 30 to be increased accordingly and the region around the screw hole 31 in particular to be strengthened.

As described above, according to the cutting tool 1 of the present embodiment, even if the flow rate is insufficient to pack the coolant flow path 100 or the jetting ports (first jetting port 118, second jetting port 122) with the coolant C, it is possible to prevent an oil shortage by reliably supplying the coolant C toward the cutting edge 32, without adversely affecting the chip discharge performance during the cutting process. In this way, the fact that it is not necessary to actually pack the branched second flow path 120 with the coolant C means that the cutting tool 1 can be used under realistic usage conditions (under the supply conditions of the coolant C), and is adapted to the implementation usage.

Note that the above-described embodiment is given as an example of a preferred embodiment of the invention, but the invention is not limited thereto, and various modifications can be implemented without departing from the gist of the invention. For example, in the above-described embodiment, the first flow path 110 is described as being a flow path extending in a substantially straight line along the X axis, but substantially straight as referred to herein includes not only the case where the flow path is strictly straight (perfectly straight) but also the case where the flow path is formed linearly as a whole even if there are some curves or corners. In short, as is clear from the above description, a condition of the cutting tool 1 of the present embodiment is that some of the coolant C flowing through the upstream-of-branch flow path 112 of the first flow path 110 flows through the second flow path 120 with a constant velocity component, and thus it is more important for the upstream-of-branch flow path 112 of the first flow path 110 to have a length greater than or equal to a predetermined length, than for the upstream-of-branch flow path 112 to be a linear flow path. Also, in the above-described embodiment, the first flow path 110 and the second flow path 120 are described as having a circular cross-section with the same inside diameter throughout and a constant cross-sectional area, but this also is merely a preferred example. In short, as long as some of the coolant C flowing through the upstream-of-branch flow path 112 of the first flow path 110 is not impeded from flowing through the second flow path 120 with a constant velocity component, the first flow path 110 and the second flow path 120 need not be circular in cross-section, and nor it is necessary for the inside diameter to be the same throughout and the cross-sectional area to be constant.

Also, the cutting tool 1 as in the present embodiment is suitable for application to a process that involves forming a doughnut-shaped groove in the end surface of the workpiece 200 by mounting the cutting tool 1 to a lathe and pressing the cutting edge 32 against the rotating workpiece 200, for example, but this application is merely an example. Apart from such a turning tool, the cutting tool 1 can also be deployed as a rotary cutting tool such as a trepanning cutter and other cutting tools.

### Working Example

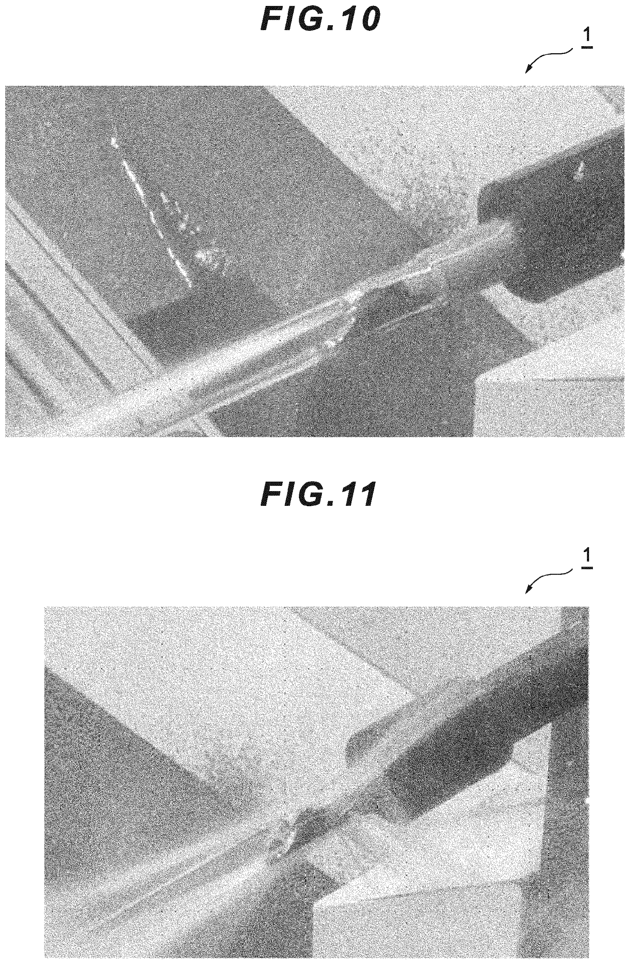

Tests conducted using a cutting tool 1 having a configuration such as the present embodiment confirmed that the coolant C can be sufficiently supplied toward the cutting edge 32 of the cutting insert 30 (see FIG. 10). On the other hand, blocking the first jetting port 118 showed that the coolant C is jetted in all directions, that is, that there are gaps in all directions, and it was thereby confirmed that gaps between the second jetting port 122 and the cutting insert 30 are not sealed, that is, that a structure only open forward is not achieved by conventional sealing (see FIG. 11).

### Industrial Applicability

The invention is suitable for application to various cutting tools including face grooving tools.

## Claims

1. A cutting tool having a structure in which a cutting insert provided with a cutting edge is removably mountable to an insert seat on a leading end portion side of a body, the cutting tool comprising:
a first flow path through which coolant is supplied from a base end portion side of the body toward the leading end portion side;
a first jetting port provided in an end portion of the first flow path;
a second flow path branching at a branch point partway along the first flow path;
a second jetting port provided in an end portion of the second flow path; and
a guide member having a guide surface disposed away from the second jetting port and at least forming a space for the coolant to flow out to the cutting edge from the second jetting port,
wherein, in the first flow path, an upstream-of-branch flow path, which is a flow path on further toward the base end portion side than the branch point, is a substantially straight flow path having a length not less than twice a length of a downstream-of-branch flow path from the first jetting port to the branch point,
the second flow path is inclined at an angle of not less than 30° and not more than 85° to the substantially straight upstream-of-branch flow path, and
a length of the second flow path is shorter than the length of the downstream-of-branch flow path from the first jetting port to the branch point.

2. The cutting tool according to claim 1,
wherein the upstream-of-branch flow path is a substantially straight flow path having a length not less than three times the length of the downstream-of-branch flow path from the first jetting port to the branch point.

3. The cutting tool according to claim 1 or 2,
wherein the guide member is provided in a position at least partially blocking a direction in which the coolant is jetted from the second jetting port.

4. The cutting tool according to claim 3,
wherein an outflow direction in which the coolant is guided by the guide member at least includes a component substantially parallel to a direction in which the coolant is jetted from the first jetting port.

5. The cutting tool according to any one of claims 1 to 4,
wherein the cutting insert is used as the guide member.

6. The cutting tool according to any one of claims 1 to 5,
wherein the second jetting port is provided in the insert seat.

7. The cutting tool according to claim 5 or 6,
wherein a portion of a first surface of the cutting insert that faces the insert seat functions as the guide surface.

8. The cutting tool according to claim 5, 6, or 7,
wherein a screw hole through which a fastening screw for fastening the cutting insert to the body is passable is provided on further toward the base end portion side than the portion of the first surface of the cutting insert that functions as the guide surface.

9. The cutting tool according to claim 7 or 8,
wherein the portion of the first surface of the cutting insert that functions as the guide surface includes an inclined portion inclined toward the cutting edge.

10. The cutting tool according to any one of claims 5 to 9,
wherein the guide member is formed such that a portion of a space between the guide member and the insert seat that faces a flank side of the cutting edge widens, and/or
wherein a cross-sectional area of the second flow path is smaller than a cross-sectional area of the first flow path in a vicinity of the first jetting port.

11. The cutting tool according to any one of claims 1 to 10,
wherein the first flow path is a flow path having a constant cross-sectional area from the upstream-of-branch flow path to the first jetting port.

12. The cutting tool according to any one of claims 1 to 11,
wherein the first flow path is a flow path having a circular cross-section from the upstream-of-branch flow path to the first jetting port, preferably
wherein the first flow path is constituted by a substantially straight flow path from the upstream-of-branch flow path to the first jetting port.

13. The cutting tool according to any one of claims 1 to 12,
wherein the second flow path is a flow path having a constant cross-sectional area from the branch point to the second jetting port.

14. The cutting tool according to any one of claims 1 to 13,
wherein the second flow path is a flow path having a circular cross-section from the branch point to the second jetting port, preferably
wherein the second flow path is constituted by a substantially straight flow path from the branch point to the second jetting port.

15. The cutting tool according to any one of claims 1 to 14,
wherein at least one of the first flow path and the second flow path is a perfectly straight flow path.
